Europäisches Patentamt

European Patent Office

Office européen des brevets

(11) Publication number: **0 410 321 A2**

# EUROPEAN PATENT APPLICATION

(21) Application number: 90113962.6

(22) Date of filing: 20.07.90

(51) Int. Cl.5: **G01B 11/04**, G01B 21/10, G01B 21/02

(30) Priority: 21.07.89 IT 6761589

(43) Date of publication of application:
**30.01.91 Bulletin 91/05**

(84) Designated Contracting States:
**BE CH DE ES FR GB IT LI NL SE**

(71) Applicant: **PRIMA INDUSTRIE S.p.A.**
**Via San Quintino, 28**
**I-10121 Torino(IT)**

(72) Inventor: **Sartorio, Franco**
**Corso Montevecchio 48**
**I-10100 Torino(IT)**

(74) Representative: **Bongiovanni, Guido et al**
**STUDIO TORTA Società Semplice Via Viotti 9**
**I-10121 Torino(IT)**

(54) **Method and apparatus for the automatic measurement of diameters and lenghts of solids of revolution.**

(57) The method of measurement allows lengths and diameters of both short round workpieces such as hubs, supports and the like and elongate workpieces such as shafts to be measured with precision in an automatic manner making use of only two numerically controlled measurement axes (10, 12); the measuring device comprises a first carriage (11) movable along a first numerical control axis (10) and provided with a workpiece carrier platform, and a second carriage (14) movable along a second numerical control axis (12) disposed orthogonally of the plane which contains the first axis; the second carriage is equipped with a C-shape structure (25) projecting from it orthogonally of the first numerical control axis, which at one end carries an optical radiation emitter (29) and at the other end carries a receiver (31) between which is transmitted a beam (30) which in use is interrupted by the solid to be measured.

Fig.1

# METHOD AND APPARATUS FOR THE AUTOMATIC MEASUREMENT OF DIAMETERS AND LENGTHS OF SOLIDS OF REVOLUTION

The present invention relates to a device for the automatic measurement of diameters and lengths of solids of revolution such as shafts, hubs, discs and other similar mechanical workpieces; the invention further relates also to a method of measurement which can be performed with this device.

It is known that in modern automated production processes it is necessary to have available measurement machines able to effect dimensional testing in an entirely automatic manner on the workpieces produced (starting from loading of the workpieces, which can be effected either by robot manipulators or manually) and at high speed, so that such machines are strictly adaptable to the machine tools (lathes, grinders); normally two types of measurement machine are produced, a first type adapted to effect measurement of elongate workpieces such as shafts and rods, and a second type adapted to measure short round workpieces that is to say those having, in dimensional terms, a diameter greater than its length, such as hubs, support discs and the like. In both cases the measurement is effected by utilising a pair of feeler devices of the absolute analogue type, which are brought up from opposite sides of the workpiece to be measured along a common rectilinear guide by measuring their displacements until the analogue devices enter a range where they are in contact with the workpiece. Measurement machines of the said type have the disadvantage that, to effect measurement of diameters, they require the algebraic sum of a good four measurement axes in that the measurements are effected by the algebraic sum of the displacements of the carriages supporting the two feelers, and the analogue measurements of these latter. Moreover, for measurement of shoulders orthogonal to the principal axes of the workpieces it is necessary to have at least one other analogue measuring device with associated axis of displacement. Known machines of the type described are furthermore of complex construction, they have a need for calibration operations and, by making all the measurements by means of displacements contained in a single principal plane of the workpiece they are not able to measure eccentricity and are of limited flexibility: for example, the form of the machine is necessarily tied to the type of workpiece to be measured so that machines for measuring shafts are structurally different from those for measuring hubs, thereby reducing the possibilities of economy of scale.

The object of the invention is that of providing a measurement device which, in the case of mechanical workpieces having relatively clean external surfaces is able to effect measurement on the workpieces themselves in a rapid and precise manner by utilising the minimum possible number of numerical control axes and maintaining the same general structure of machine both for long workpieces and for short round workpieces. A further object of the invention is that of providing a flexible, precise and economic method for the measurement of diameters and lengths of solids of revolution.

The said objects are achieved by the invention, which relates to a device for the automatic measurement of diameters and lengths of solids of revolution, of the type comprising first and second measurement axes along each of which a respective carriage is movable in a controlled manner characterised by the fact that a first carriage, provided with support means for a workpiece to be measured, is movable along the said first axis of measurement, and by the fact that the said second axis of measurement is disposed orthogonally to a plane containing the first axis, a second carriage being translatable along the said second axis carrying a projecting C-shape structure comprising a crosspiece disposed perpendicularly of the first axis and a pair of arms carried on the ends of the said crosspiece at a distance greater than the maximum diameter measurable with the said device; a first of the said arms supporting means for emitting a beam of optical radiation and a second arm supporting a receiver for the said beam adapted to provide an indication when the said beam is interrupted.

The invention also relates to a method for the automatic measurement of diameters and lengths of solids of revolution, characterised by the fact that it comprises the following stages:
- mounting a workpiece to be measured in a predetermined position on a first carriage;
- generating a beam of optical radiations between an emitter and a receiver disposed facing it and mounted fixedly on a second carriage;
- displacement of one of the said first and second carriages in a predetermined direction in such a way as to cause a relative displacement between the said workpiece to be measured and the said beam in a direction perpendicular to the said beam, the said displacement being continued until the said beam is interrupted by the said workpiece to be measured;
- continuation of the displacement of the carriage in the said predetermined direction until the said beam is no longer interrupted, calculating the distance traversed by the carriage between the moment in which the beam is interrupted and the moment in which the interruption ceases.

For a better understanding of the invention a non- limitative description of an embodiment is now given with reference to the attached drawings, in which:

Figure 1 schematically illustrates the measurement device of the invention and a measurement stage which can be performed therewith;

Figures 2 and 3 illustrate two orthogonal views in elevation of the device of the invention;

Figure 5 illustrates a detail on an enlarged scale of the device of Figure 1; and

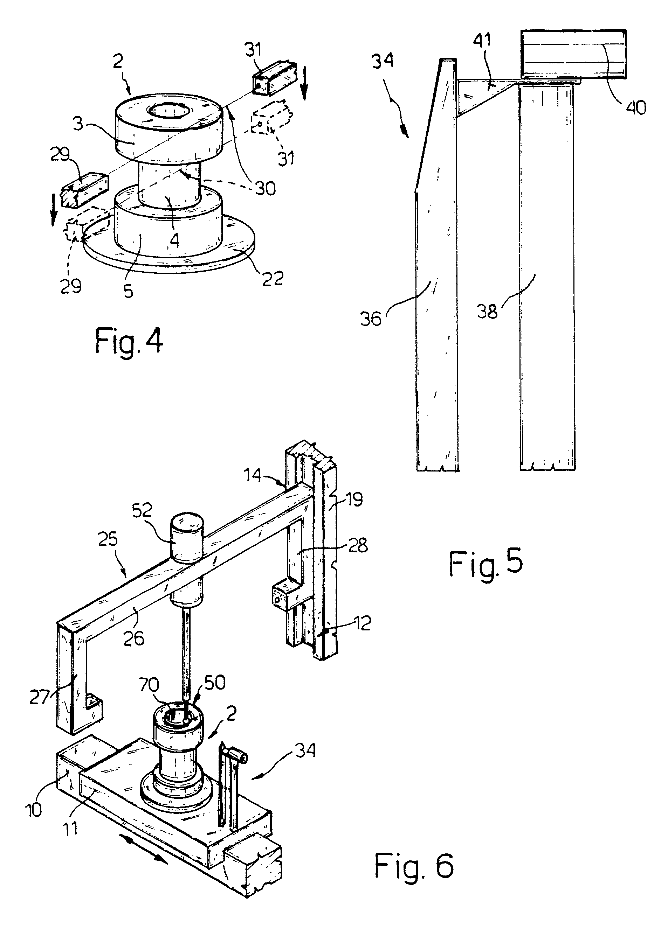

Figures 4, 6 and 7 illustrate respective measurement stages performed with the device of the invention.

With reference to Figures from 1 to 3, the reference numeral 1 indicates a device for performing automatic measurement of diameters and lengths of a mechanical workpiece 2, for example comprising three cylindrical surfaces 3, 4 and 5 of different diameters and lengths, and, more generally, of any type of solid of revolution; the device 1 is, in the illustrated example, served by an automated loading station 6 comprising a stacking zone 8 for workpieces 2 to be measured, a loading zone 7 and a robot manipulator 9 of known type acting to transfer the workpieces 2 from the stacking zone 8 to the loading zone 7. This latter, according to the invention, is an integral part of the device 1, which includes a first measurement axis 10 of the numerical control type on which a first carriage 11 is mounted for translation in a controlled manner, and a second measurement axis 12, also of the numerical control type, on which a second carriage 14 is mounted for translation in a controlled manner; the numerical control axes 10 and 12 are in the specific example defined by respective rectilinear guides provided with suitable motor means for the carriages 11, 14 and with position detector means for these with respect to a system of reference coordinates, all known and not illustrated for simplicity. For example, the carriages 11, 14 can be motorised by means of suitable servo motors provided with encoders connected to an electronic central control unit 16. Furthermore, according to the invention the axis 12 is disposed perpendicularly to the plane in which the axis 10 is contained; in the specific example the axis 10 and associated carriage 11 are supported horizontally by a bed 18, whilst the axis 12 and the carriage 14 are supported by a vertical column disposed to one side of the bed 18.

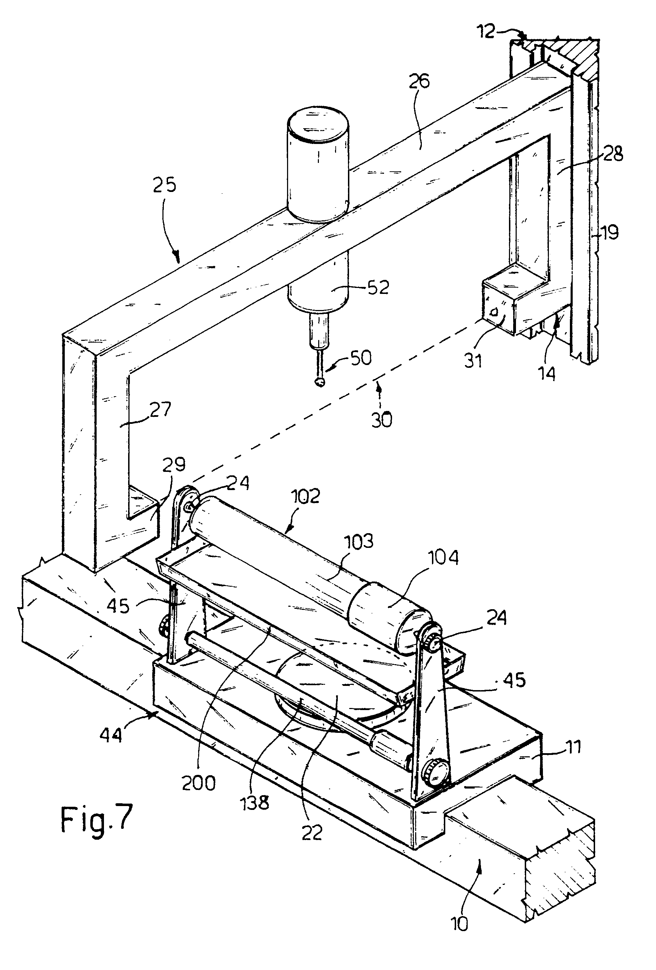

The axis 10 has a length such as to define the loading zone 7 with its terminal end 20, when this is occupied by the carriage 11; therefore, in substance, the axis 10 is dimensioned in such a way as to be able to transfer the carriage 11 between the loading zone 7 and a measurement zone 21 disposed in correspondence with the column 19, so that the axis 10, as well as being the measurement axis, also functions as a workpiece transfer axis; the carriage 11, thanks to its position, is in fact adapted to receive and support the workpieces 2 to be measured, which are loaded and unloaded from it one at a time by the manipulator 9 when the carriage 11 is located at its end-of-stroke position on the end 20 of the axis 10; for the purpose of supporting the workpieces 2 in a fixed and precise position the carriage 11 is further provided with support means which, in the case of short round workpieces such as the workpiece 2 illustrated, comprises a workpiece carrier table 22 of the type provided with self-centring jaws (not illustrated) and preferably mounted rotatably on the carriage 11 parallel to the plane which contains the axis 10 and provided with its own independent motorisation. As is illustrated in Figure 7, in the other case of elongate workpieces such as a shaft 102 provided with respective cylindrical surfaces 103 and 104 of different length and diameter, the said support means comprises a pair of opposite centre pins 24, or of other clamping devices such as the self-centring type used on lathes, in this case too preferably provided with its own independent motorisation adapted to permit the rotation of the workpiece 102 about its longitudinal axis; since in both cases, as will be seen, the structure of the measurement device 1 remains the same, the carriage 11 can also be simultaneously provided with both clamping devices (table 22 and centre points 24 or the like) so that the device 1 of the invention can function both as a universal device able to receive workpieces of any type to be measured, and as a specialised machine, for example only for short round workpieces such as the workpieces 2 or only for elongate workpieces such as the workpieces 102.

The second carriage 14 is on the other hand provided with sensor systems adapted to allow the desired measurements to be effected and which, in the specific example, is a system which does not require physical contact between the sensors and the workpieces to be measured, at least as far as the external dimensions of the workpiece to be measured are concerned. The carriage 14 carries a laterally projecting C-shape structure 25 lying in a plane perpendicular to that containing the axis 10 and in turn containing the axis 12, the C-shape structure having its open part facing downwardly, that is towards the axis 10; this C-shape structure 25 comprises a crosspiece 26 disposed perpendicularly of the axis 10 and extending perpendicularly of the axis 12, and a pair of opposite arms 27, 28 disposed parallel to the axis 12 and carried on opposite ends of the crosspiece 26 at a distance from one another greater than the maximum diameter declared measurable by the device 1; the arm 27 supports at its free ends an emitter 29 adapted to emit a beam 30 of optical radiation (by "optical radiation" it is intended here and hereinafter to indicate electromagnetic radiation of a wavelength in the region of visible light or in its immediate vicinity, for example in the infra red spectrum), whilst the arm 28 supports in a corresponding position a receiver 31 disposed facing the emitter 29 and adapted to receive the beam 30; for example the emitter 29 can consist of a low power laser adapted to generate a beam 30 of monochromatic radiation (that is having the same wavelength) in, or close to, the visible region (infra red, ultra violet etc); alternatively it can comprise a simple light source having optics adequate to render the beam of uniform diameter or focussed in the median plane of the workpiece which is perpendicular to the beam 30; the receiver 31 will in each case comprise, for example, a simple photodetector of type adapted to the source in the emitter 29. In each case this receiver 31 must be adapted to indicate promptly to the central control unit 16 the interruption of the beam 30 and its subsequent reinstatement; for example, the photodetector 31 is adapted to generate an electrical signal for the whole of the time in which the beam 30 is interrupted, or rather no longer reaches and strikes the receiver 31; alternatively it may be adapted to generate a continuous signal proportional to the intensity of the beam 30 for which it will be the interruption of this signal which indicates to the central control unit 16 the occurrence of an interruption of the beam 30; alternatively it may be adapted to generate two separate instantaneous signals at the exact moment in which the beam is interrupted and, then, at the exact moment in which it is reinstated.

For the purpose of ensuring precise measurements it is necessary constantly to ensure the correct calibration of the photoelectric sensor device; this is obtained according to the invention by pre-arranging on the carriage 11, in a predetermined known position which is fixed with respect to the means for supporting the workpiece 2 (102) to be measured, a specimen 35 defined by a shaft of known uniform diameter disposed with its axis parallel to that of the workpiece 2 to be measured and contained in the same plane as this workpiece 2. In particular (Figure 5) the shaft 35 can be supported by a device 34 consisting, for example, of a bracket 36 mounted vertically on the carriage 11 and possibly also supporting a second specimen 40 disposed at a right angle with respect to the shaft 35, for example supported parallel to a horizontal bracket 41 projecting from the bracket 36; alternatively, in the case of the workpiece 102, the device 34 can be replaced or flanked by a similar device 44 (Figure 7) comprising a pair of supports 45 fixedly carried by the carriage 11 and between which there is suspended, parallel to and, in the specific example, underlying the workpiece 102 to be measured, a specimen 138 defined, for example, by a small shaft of known and predetermined diameter and length. Both the devices 34 and 44 are in substance adapted to support a specimen (35, 40 or 138) of known dimensions in correspondence with the median plane of the workpiece (2, 102) to be measured, perpendicular to the axis 10, in such a way that the beam of optical radiation 30 can cooperate separately and in succession with the specimen and, subsequently, with the workpiece to be measured or vice versa, in a known sequence. Moreover, between the specimen (35, 40 or 138) and the workpiece 2, 102 to be measured there is preferably inserted a separator element having the purpose of preventing the workpiece to be measured from accidentally knocking against the specimens; in particular, in the case of the device 34, the bracket 36 will be positioned in such a way as to be interposed between the pieces 2 and 35, 40; on the other hand, in the case of the device 44, the supports 45 carry the centre points 24 (or analogous gripping devices) at their upper ends, carry the specimens 138 at their bases and, at an intermediate height, support a grill or tray 200 which is interposed between the specimen 138 and the workpiece 102 and is adapted to catch this latter if it should fall.

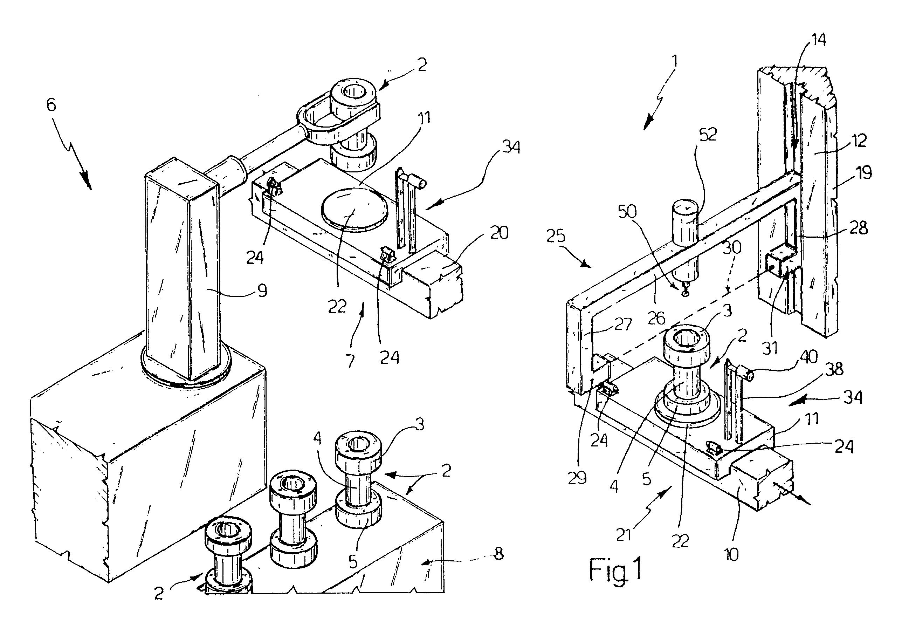

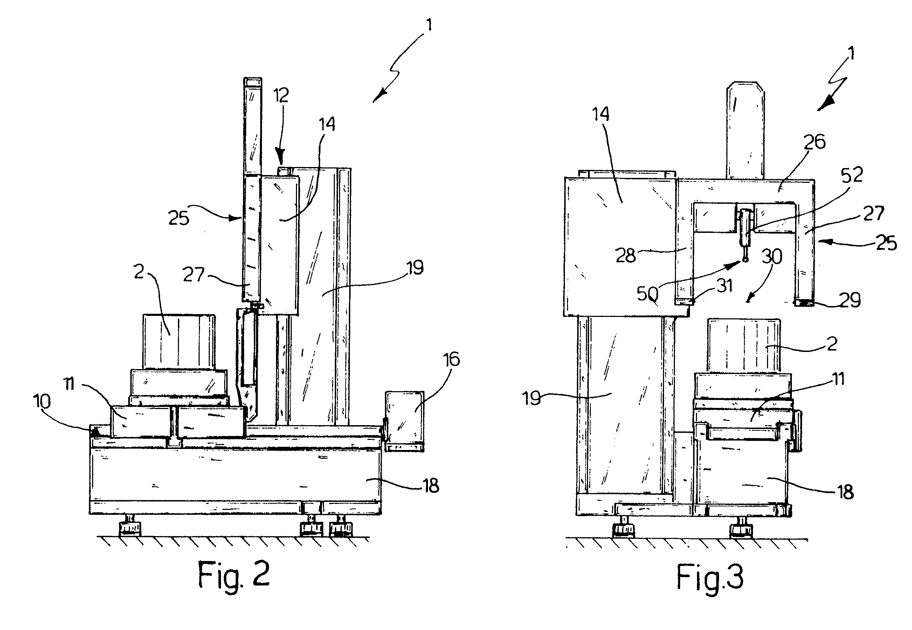

According to a further characteristic of the invention, the device 1 also includes a feeler device 50 of known type (preferably of the zero switch type, but can also be of the absolute analogue type) which is adapted to generate a signal sent to the central control unit 16 whenever it is brought into contact with the workpiece 2 (102) to be measured regardless of the direction of contact, and which is carried fixedly by the structure 25, in the specific example by a linear actuator 52 carried fixedly in the middle of the crosspiece 26; this actuator 52 is adapted to displace the feeler 50 selectively between two end-of-stroke positions, in particular between the rest position illustrated in Figures 1, 3 and 7 in which the feeler 50 is retracted towards the crosspiece 26, spacing it from the emitter 29 and the receiver 31 so as not to interfere with the light beam 30 and in any case outside the trajectory thereof, and a working position, illustrated in Figure 6, in which the feeler 50 is disposed between the arms 27, 28 in a position such as to be able to cooperate with the workpiece to be measured which is positioned on the carriage 11, in the specific example with the workpiece 2, whilst the emitter 29 is disactivated.

To effect measurement of the dimensions of the workpiece 2 and, in general, of short round workpieces, the following operations are performed. The workpiece 2 to be measured is mounted on the carriage 11 on which the workpiece 2 is then retained in a predetermined position by the table 22, displacing the carriage 11 along the axis 10 in the loading zone 7 and operating the manipulator 9 in a suitable manner; then the carriage 11 with the workpiece 2 is moved into the workpiece zone 21 by means of a displacement in an opposite sense along the axis 10. In the meantime the structure 25 is lowered along the column 19 to bring it into the measurement zone 21 by a displacement of the carriage 14 along the axis 12 until the beam 30 is brought into correspondence with the cylindrical surface of the workpiece 2 the diameter of which it is desired to measure, for example the cylindrical surface 3, the position is known in that the theoretical coordinates of the workpiece 2, referred to the position of the table 22, have previously been memorised in the central control unit 16 to which the servo motors of the axes 10 and 12 are subject; at this point the measurement commences, which is performed by effecting a movement of the carriage 11 along the axis 10 and holding the structure 25 stationary on the axis 12: the carriage 11 is displaced in a predetermined direction, for example that indicated by the arrow in Figure 1, and in any case perpendicular to the laser beam 30, in such a way as to make it first the specimen 35 and then the workpiece 2 traverse across this, which is located positioned just at the height of the cylindrical surface 3.

In particular, during this movement the laser beam 30 is temporarily interrupted by the transit of the bracket 34; the central control unit 16 is programmed in such a way as to ignore this fact. Then the beam 30 is interrupted by the transit of the specimen 38: this interruption is detected immediately by the detector 31 and from this moment the central control unit 16 commences to measure the distance travelled by the carriage 11; as soon as the specimen 38 completes its transit across the beam 30 the interruption ceases and the detector 31 signals this fact to the central control unit 16, which stops the count: the calculation of the distance covered by the carriage 11 between the moment in which the beam 30 is interrupted and the moment in which the interruption ceases provides a value which is unequivocally correlated to the diameter of the specimen 38. This value is compared by the central control unit 16 with the effective diameter of the specimen memorised therein and, on the basis of this comparison, the central control unit 16 calculates a corrective value such as to make the measurement read become equal to the memorised diameter of the specimen. Then the cylindrical surface 3 of the workpiece 2 the diameter of which it is desired to measure also transits across the beam 30; in this case too the detector 31 indicates to the central control unit the commencement and the end of the transit of the workpiece 2 across the beam 30 in a similar manner to that first described and the central control unit 16 is therefore able to calculate the distance travelled by the carriage 11 in the time interval between the two indications (of interruption and end of interruption of the beam 30); this value is then corrected by the previously calculated correction value and the result provides the value of the diameter of the cylindrical surface 3. In a similar manner, simply by varying the height of the beam 30 by suitable displacements of the carriage 14 along the axis 12, it is possible also to detect the diameters of the cylindrical surfaces 4 and 5. It is also evident that it is entirely unimportant whether the specimen workpiece 38 or the workpiece 2 to be measured transits first across the laser beam 30 since the measurement can be effected both when the carriage 11 moves in the direction of the arrow (Figure 1) and when it moves in the opposite direction, the relative position of the workpiece 2 and that of the specimen 38 with respect to the reference system utilised being known and memorised in the central control unit 16, this latter being always informed of the relative position of the carriage 11.

With reference to Figure 4, the device 1 is also able to detect the lengths (or thicknesses) of the various cylindrical surfaces 3, 4, 5: in this case the workpiece 2 is arranged in a fixed position with respect to the column 19 by means of suitable displacement of the carriage 11 effected in such a way that the beam 30 becomes focussed in a chordal position, that is it becomes laterally displaced with respect to the longitudinal median plane of the workpiece 2 to be measured; then, holding the carriage 11 still the carriage 14 is displaced along the axis 12 in such a way that the detector 31 and the emitter 29 pass, for example, from the position illustrated in continuous outline to that illustrated in broken outline; during this displacement the beam 30 is interrupted, in that it interferes with the cylindrical surface 3, and the interruption ceases as soon as the emitter 29 and receiver 31 are displaced beyond the end of the cylindrical surface 3, in correspondence with the cylindrical surface 4 of smaller diameter, since the chordal position in which the measurement is effected is chosen in such a way that the beam 30 is outside the dimension of the cylindrical surface 4. As previously described the central control unit 16 is able to calculate the distance travelled by the carriage 14 between the beginning and the end of the interruption of the beam 30, which distance corresponds to the length (height) of the cylindrical surface 3; the calculated value can also in this case be corrected by means of a preliminary or successive measurement, for example, of the diameter of the specimen 40, which is known in advance, in such a way as to be able to calculate a correction value; this diameter is detected by carrying the structure 25 into correspondence with the device 34 and by a vertical displacement of the carriage 14 making the beam 30 impinge on the workpiece 40.

In the case of elongate workpieces, of the type 102 (Figure 7) measurement of the diameter of the various cylindrical surfaces 103, 104 is effected, after suitable equipment of the carriage 11 with a suitable support device for the workpiece, by carrying the carriage 11 into the measurement zone, disposing it in such a way that the cylindrical surfaces the diameter of which it is intended to measure are located in correspondence with the beam 30, and then holding the carriage 11 stationary whilst effecting the measurement movement of the carriage 14; the structure 25 is, for example, lowered towards the carriage 11 and, as soon as the beam 30 is intercepted by the cylindrical surface the diameter of which it is desired to measure, for example the surface 103, the detector 31 sends a signal to the central control unit 16 which commences memorisation of the displacement which the carriage 14 performs in its downward movement until a new signal from the detector 31 is received at the moment when the beam ceases to be intercepted by the cylindrical surface 103 having passed beyond it. Similarly, the central control unit 16 detects the known diameter of the specimen 138 calculating a correction value which, applied to the memorised displacement performed by the carriage 14 between the commencement and the end of the interference between the beam 30 and the cylindrical surface 103, provides the exact value of the diameter of this latter.

Finally, if it is necessary also to measure the internal diameters (Figure 6) the device 1 can operate in a conventional manner with the feeler 50, with the single difference that the measurement is performed by holding the feeler stationary and causing the carriage 11 to translate and not vice versa as in known measurement machines. Once the carriage 11 with the workpiece 2 is carried into the measurement zone 21 the feeler 50 is brought into working position by operating the actuator 52 in such a way as to bring it into the interior, for example, of a hole 70 in the workpiece 2; then the carriage 11 is actuated to bring the feeler 50 into contact with the internal wall of the hole 70, the feeler being positioned in correspondence with the median plane of the workpiece 2; as soon as the feeler 50 touches the workpiece 2 a signal is sent to the central control unit 16 which reverses the motion of the carriage 11 and commences memorisation of its displacement until the feeler 50 again comes into contact with the internal walls of the hole 70 (from the opposite side this time!) sending a new signal to the central control unit 16 which, on the basis of the displacement performed by the carriage 11 between the reception of the two signals from the feeler 50 calculates the diameter of the hole 70. In this case it is necessary to introduce to the calculated value, in a known way, only the correction relating to the dynamic diameter of the feeler since physical contact has taken place between the sensing means (feeler 50) and the workpiece to be measured.

From what has been described the advantages connected with the invention will be evident; with the measurement method described a machine with only two numerical control axes can be utilised and, therefore, this can be made very economically and for the most part can be of universal application in that, with the same physical structure (and only with different workpiece supporting equipment) it is able to measure both short round workpieces and elongate workpieces; even if the measurement machine or device is made in specialised versions for a single type of workpiece (on the basis of the equipment on the carriage 11) it is possible to utilise substantially the same components, with great economies of scale. The use of an optical measurement method, in particular with a light beam, that is without physical contact between the workpiece to be measured and the sensor means, finally allows very high working speeds all without having to reduce the measurement precision, which is very high in that, in practice, the measurement device, by means of the periodic reading of the dimensions of the specimens, is calibrated before (or after) each individual measurement effected on the workpiece to be tested, thus holding under control any possible variations in the ambient conditions (humidity, temperature) which could influence the measurement. The use of rotary support means for the workpiece to be measured further permits measurement of possible eccentricity in the workpieces by effecting several measurements of the same diameter with the workpiece disposed in different angular positions.

**Claims**

1. A device for the automatic measurement of diameters and lengths of solids of revolution, of the type comprising first and second measurement axes along each of which a respective carriage is movable in a controlled manner, characterised by the fact that a first carriage (11) provided with support means (22, 24) for a workpiece to be measured is translatable and by the fact that the said second measurement axis 12 is disposed orthogonally of a plane containing the first axis, a second carriage (14) carrying a projecting C-shape structure (25) being translatable along the said second axis, the C-shape structure (25) comprising a crosspiece 26 disposed perpendicularly of the first axis and a pair of arms (27, 28) carried on the ends of the said crosspiece at a greater distance than the maximum diameter measurable with the said device; a first of the said arms supporting an emitter (29) adapted to emit a beam (30) of optical radiation, and a second arm supporting a receiver (31) for receiving the said beam, the said receiver being adapted to indicate when the said beam is interrupted.

2. A device according to Claim 1, characterised by the fact that the said first carriage supports at least one specimen workpiece (35, 40, 138) of known dimensions in a predetermined position disposed parallel to the longitudinal axis of the workpiece (2, 102) to be measured and disposed in a position such that the said beam of optical radiation can cooperate in succession with the specimen workpiece and with the workpiece to be measured or vice versa.

3. A device according to Claim 2, characterised by the fact that between the said specimen workpiece (35, 40, 138) and the said workpiece (2, 102) to be measured there is interposed a protection element (36, 200) adapted to intercept the workpiece to be measured in the event of accidental displacements thereof; the said receiver (31) being connected to a central control unit (16) programmed in such a way as to ignore the interruptions of the beam (30) caused by the said protection element.

4. A device according to any preceding Claim, characterised by the fact that the said first and second measurement axes (10, 12) are axes of numerically controlled motion.

5. A device according to any preceding claim, characterised by the fact that the said first measurement axis has a length such that the said first carriage can translate between a measurement zone (21), disposed in correspondence with the said second axis (12), and a loading zone (7) disposed in correspondence with one end (20) of the said first measurement axis.

6. A device according to any preceding Claim, characterised by the fact that the said crosspiece of the C-shape structure supports, in a predetermined position, a feeler device (50) adapted to generate a signal wherever it is brought into contact with a workpiece to be measured, and means (52) for selectively displacing the said feeler device between a working position in which it is disposed between the said arms, and a rest position, in which the feeler is retracted away from the said emitter and receiver in such a way as not to interfere with the said beam (30) of optical radiation.

7. A device according to any preceding Claim, characterised by the fact that the said emitter (29) is a low power laser.

8. A device according to any preceding Claim, characterised by the fact that the said support means (22, 24) for the workpiece to be measured are adapted to rotate the workpiece about its axis of symmetry in such a way as to allow measurement of eccentricity by repeated measurements of the same diameter.

9. A method of automatically measuring the diameters and lengths of solids of revolution, characterised by the fact that it comprises the following stages:
- mounting a workpiece to be measured in a predetermined position on a first carriage;
- generating a beam (30) of optical radiation between an emitter and a facing receiver mounted fixedly to a second carriage;
- displacing one of the said first and second carriages (11, 14) in a predetermined direction in such a way as to cause a relative displacement between the said workpiece to be measured and the said beam in a direction perpendicular to the said beam, the said displacement continuing until the said beam is interrupted by the workpiece to be measured;
- further displacement of the carriage in the said predetermined direction until the said beam is no longer interrupted, calculating the distance travelled by the carriage between the moment when the beam is interrupted and the moment when the beam is no longer interrupted.

10. A method according to Claim 9, characterised by the fact that the said stages of displacement and further displacement of the carriage in the said predetermined direction are performed in such a way as to interrupt the said beam first with a first specimen workpiece (35, 158) of known dimensions and, subsequently to interrupt the said beam with the workpiece under test or vice versa.

11. A method according to Claim 9 or Claim 10, characterised by the fact that to effect measurement of length the beam (30) is focussed in a chordal position, and by the fact that a second specimen workpiece (40) disposed at right angles to the first specimen workpiece (35, 138) is displaced fixedly with the workpiece to be measured.

12. A method according to Claim 9, characterised by the fact that the workpiece to be measured is made to rotate about its axis of symmetry and one diameter thereof measured several times by means of the said beam (30) in such a way as to determine any possible eccentricity thereof.

Fig 1

Fig.3

Fig. 2

Fig. 4

Fig. 5

Fig. 6

Fig.7